# EUROPEAN PATENT APPLICATION

(11) **EP 2 172 108 A1**
(43) Date of publication of application: **07.04.2010**
(21) Application number: 08165635.7
(22) Date of filing: 01.10.2008
(51) Int. Cl.: A21C 9/08, A21D 13/00

(54) **Process and apparatus for mass-production of decorated pancakes, crepes, etc., and composite product derived therefrom**

(71) Applicant: Brysse, Mr. Marc, 8200 Sint-Andries (BE)
(72) Inventor: Brysse, Mr. Marc, 8200 Sint-Andries (BE)
(74) Representative: Leherte, Georges M.L.M.

(57) **Abstract**

The invention relates to a process for preparing a food product in the form of a sheet, having a selected shape and/or incorporating decorative designs / images, comprising pouring a liquid batter on a heated surface according to selected shapes and/or decorative designs, applying at least one, preferably several, of a selected list of techniques, alone or in combination; an apparatus for producing such sheet shaped food product, and such sheet shaped food product when associated, as a combined party packaging unit, with atmosphere and/or user linked accessories for its use and/or consumption.

## Description

The invention concerns the preparation of pancakes, crepes, and similar products, and more in particular the mass production of food products in the form of sheets (pancakes, crepes, tortillas, 'brick' pastry, etc.) having selected shapes and/or incorporating decorative designs / images.

The mass production of pancakes, crepes, tortillas, brick pastry, and more generally food products in sheet form, is known in the patent literature. Reference can be made in this respect to, for instance, US 2008/0060531 (pancakes and the like), WO 2004/100672 (food products in the form of sheets such as sheets of brick pastry), EP 1 759 585 (sandwich pancakes), US 3,993,788 (tortillas and similar products).
Some of these state of the art mass production methods involve imprinting artwork onto the food that is being cooked (US 2008/0060531), or stamping of a design on the outer surface of the product (EP 1 759 585). Printing or stamping of decorative figures on food products is however a drawback in itself and the techniques there for are generally not satisfactory for moist products like pancakes.
The mass production of shaped food products, using moulding shapes or shaped baking plates has on the other hand the drawback of being not optimally compatible with the rather liquid batters as used for Dutch, French or American type pancakes and crepes, and of impairing the versatility of the method linked to such preset moulds.

Home preparation of 'designer' pancakes (i.e. pancakes having selected shapes and/or incorporating decorative designs / images) is rather well disclosed on numerous internet blogs, but the very 'artisanal' techniques explained there are not suitable for mass production of 'designer' food products in sheet form.

It is the objective of the present invention to remedy the drawbacks of this state of the art and to provide a process and an apparatus for mass production of food products in the form of sheets having selected shapes and/or incorporating decorative designs / images.

The invention accordingly provides a process for the industrial preparation of food products in the form of sheets, such as in particular pancakes and crepes, by pouring a liquid batter on a heated surface according to selected shapes and/or decorative designs, which process involves at least one of the following techniques, used alone or in combination :
- using at least two distinct batter compositions of distinct colours;
- using at least two distinct batter compositions of distinct viscosity;
- using at least two distinct batter compositions, one of which is adapted to resist a different duration at a temperature between 100° and 250° C than the other;
- using at least two distinct batter compositions, one of which is adapted to build bubbles to a different extent, at a temperature between 100° and 250° C, than the other
- using at least two distinct batter compositions, one of which is applied to build well defined batter lines (strips, ribbons) which define an outer outline and/or design lines of the sheet shaped food product;
- using at least two distinct batter compositions, one of which is adapted to build stable, well defined continuous batter lines with a size of less than 15 mm upon being deposited on a heated surface (in particular a baking plate) at a temperature between 100° and 250° C ;
- building batter lines, which define an outer outline of the sheet shaped food product, on a heated surface at a temperature between 100° and 250° C;
- using a pouring head or die, toppling pouring cup or spray head, in particular a shower type spray head, for pouring an amount of batter within a preformed batter outline;
- using a spray-robot to build a well defined batter outline and/or design lines on an intermittently or continuously moving heated surface at a temperature between 100° and 250° C.

The expression 'resist differently' in particular refers to the fact that one of the batter compositions may resist longer to the stated temperatures without 'burning' / 'charring', and or will keep / acquire a baked flexibility comparable to the baked flexibility of said other batter compositions having been submitted for a shorter time to said temperature between 100° and 250° C.

The expression 'which build bubbles to a different extent', as used in this context, has to be understood, more in particular, in the sense that one composition builds less bubbles than the other, or even substantially no bubbles, when treated at a temperature between 100° and 250° C.

The distinct batter compositions of distinct colours referred to above may in particular involve the use of colouring substances (like cacao in particular or food grade colorants , food grade dyes, food grade inks, etc.) and / or additives favouring the colouring / browning of baking products (such as in particular reducing sugars) as well known in the art, etc.

The distinct batter compositions of distinct viscosity may in particular result from the use of batters with a different water ratio (different dry matter content).

The water ratio / water content / humidity ratio of the batter also influences its ability to resist the baking temperature (100° - 250° C) and the ability of the batter / dough to remain flexible and supple upon baking, and to 'resist differently' to a temperature between 100° and 250° C.
The actual amount of water over dry matter in the batter should be in the usual (well known) range (depending on the type of product one intends to obtain : Dutch / American or French type pancakes); what is essential however is that there is a water content difference between the (at least) two distinct batters used in accordance with the invention.

In this context, and more particularly in the context of the flexibility of the final baked product, the proportion of sugar and fat in the batter (sugar / fat ratio) is also very important.

According to a preferred feature of the invention the process for industrial preparation of sheet shaped food products, such as pancakes and crepes, involves a combination of at least two of the listed techniques.

The process according to the invention is preferably carried out using an intermittently or continuously moving heated surface, such as, more particularly, an intermittently or continuously moving carrousel construction, an intermittently or continuously linear transfer construction, etc.

In accordance with a preferred feature of the invention well defined batter lines (strips, ribbons) building the outline of the sheet shaped food product, and/or building 'design' lines of the sheet shaped food product (which may build further contours inside an outer contour of the sheet shaped food product) are provided on the heated surface (in particular a baking plate) using at least one pouring head or die at a distance of less than 100 mm, preferably less than 50 mm and most preferably less than 10 mm from the heated surface.

The main surface of the sheet shaped food product is preferably formed by pouring a separate batter mass, manually or mechanically (by computer controlled means, such as spray robots), using at least one static or moving pouring head or die, toppling pouring cup or spray head, most preferably a shower type spray head.

According to one preferred embodiment of the invention a contour outline (and optional design contours within said outer contour) are first provided on the heated surface and subsequently filled up with the separate batter mass forming the main surface of the sheet shaped food product
The 'filling up' batter mass can thereby be poured over optional design lines (and contour lines inside the outer contour) which may also have been provided before pouring the'filling up' batter mass.

According to an alternative embodiment of the invention the batter lines (in particular the batter lines forming designs and figures, such as stripes, signs, letters, numbers, characters, etc.) within the outer contour of the sheet shaped food product according to the invention can also be provided after first pouring the filling up batter mass.

Pouring the amount of 'filling up' batter mass over / around / within said outer contour, said contour outline, said inner contour outlines and/or said 'design' lines, respectively, can thus be carried out using at least one pouring head or die, at least one toppling pouring cup or at least one shower type spray head, before or after pouring such batter outlines and/or 'design' lines.

The batter mass used for filling up the contour of the sheet shaped food product is preferably more fluid / more liquid than the batter composition used for the contour strips and/or design strips).

According to a further feature of the invention, a spray-robot can be used for providing the batter outlines and/or design lines on the heated surface and/or for providing the 'filling up' batter mass.

The invention also specifically covers a sheet shaped food product having a selected shape and/or incorporating selected decorative designs / images, as may be obtained by a process as disclosed here above, when associated, as a combined party packaging unit, with atmosphere and/or user linked accessories for its use and/or consumption, designed, for instance, for a kids' party or the like.
Suitable accessories for such combined party packaging unit may for instance comprise appropriately decorated (such as with corresponding and/or associated 'characters') table sheets, napkins, plates, cutlery, cups or beakers, etc., as well as drinks, pancake spreads and toppings, etc., further candies and sweets, further party accessories like party decoration, streamers, ticker tapes, etc.

The invention also specifically covers an apparatus for producing a sheet shaped food product according to the invention, with means for pouring a liquid batter on a heated surface and means for handling the obtained product, which apparatus comprises
- means for handling at least two distinct batter compositions
- robot means for building a well defined batter outline and/or design lines of a first batter composition on a heated surface at a temperature between 100° and 250° C
- means for pouring a second batter within a preformed batter outline.

The apparatus according to the invention more particularly may involve :
- a flour silo
- a dough preparation unit
- a baking line comprising rotating or linearly moving baking tables, involving :

- a robot for laying the contour strip and the face features on one ore more rows, for one or more pancakes simultaneously, using batter 1
- one or more spray or pouring heads on one or more rows for filling up the contours with batter 2
- a sprayer for spraying oil
- transfer unit from the baking plate to the transport unit
- cooling tunnel for cooling the pancakes to minimum 0°C and / or
- freezing unit for deep freezing the pancakes to - 22 C (alternatively positioned after the packaging unit)
- piling unit for piling up the pancakes
- packaging unit

The invention is further illustrated by the following examples of non limitative embodiments of the method and products claimed here after.

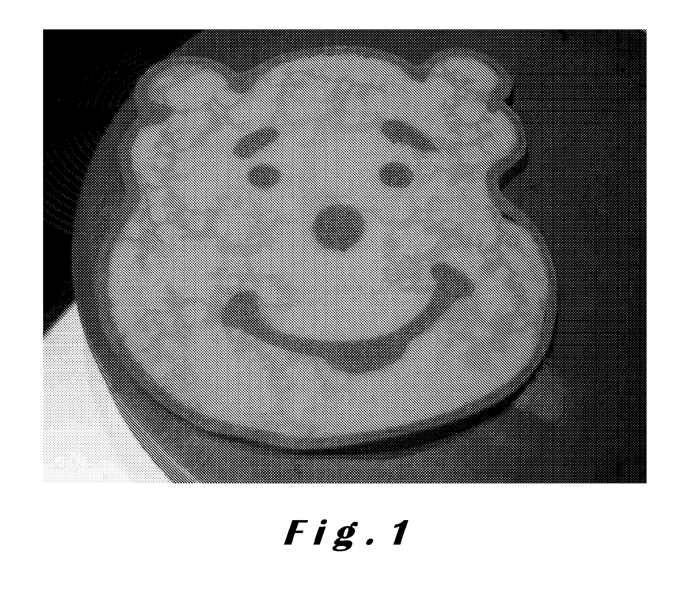

Figure 1 : one example of a pancake obtained with the process according to the invention (character design of Winnie the Pooh)

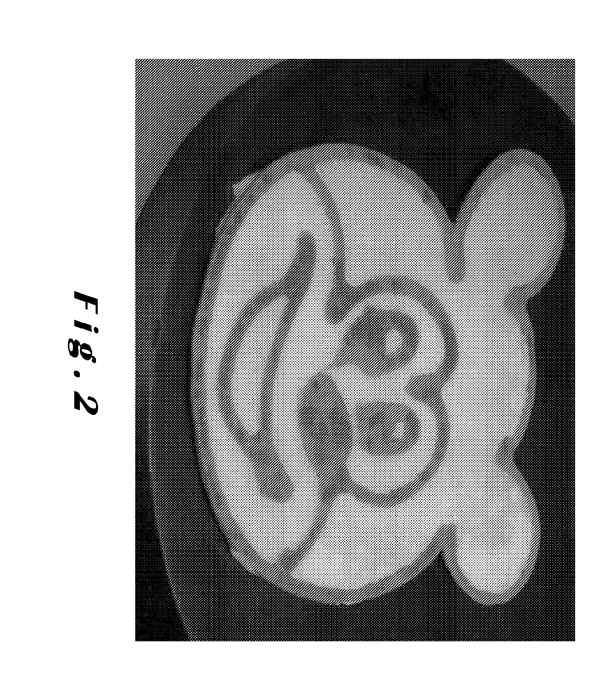

Figure 2 : another example of a pancake obtained with the process according to the invention (character design of Mickey Mouse)

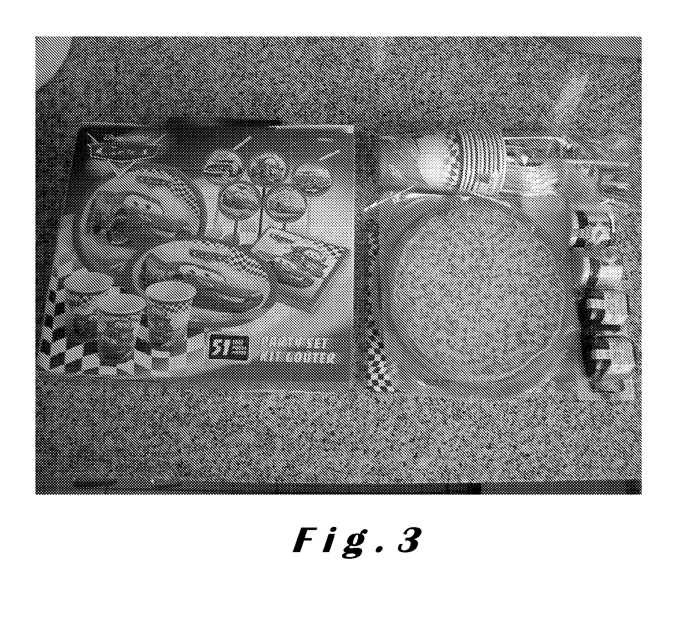

Figure 3 : example of a party kit according to the invention (character design on the pancakes not shown)

## Claims

1. Process for preparing a food product in the form of a sheet, having a selected shape and/or incorporating decorative designs / images, comprising pouring a liquid batter on a heated surface according to selected shapes and/or decorative designs, **characterised in that** it uses at least one of the following techniques, alone or in combination :
- using at least two distinct batter compositions of distinct colours;
- using at least two distinct batter compositions of distinct viscosity;
- using at least two distinct batter compositions, one of which is adapted to resist a different duration at a temperature between 100° and 250° C than the other;
- using at least two distinct batter compositions, one of which is adapted to build bubbles to a different extent, at a temperature between 100° and 250° C, than the other
- using at least two distinct batter compositions, one of which is applied to build well defined batter lines which define an outer outline and/or design lines of the sheet shaped food product;
- using at least two distinct batter compositions, one of which is adapted to build stable, well defined continuous batter lines with a size of less than 15 mm upon being deposited on a heated surface at a temperature between 100° and 250° C ;
- building batter lines, which define an outer outline of the sheet shaped food product, on a heated surface at a temperature between 100° and 250° C;
- using a pouring head or die, toppling pouring cup or spray head, in particular a shower type spray head for pouring an amount of batter within a preformed batter outline;
- using a spray-robot to build a well defined batter outline and/or design lines on an intermittently or continuously moving heated surface at a temperature between 100° and 250° C.

2. Process according to claim 1, **characterised in that** it uses a combination of at least two of the listed techniques.

3. Process according to any one of the preceding claims,
**characterised in that** at least one of the batter compositions of distinct colours comprises colouring substances and / or additives favouring the colouring / browning of baking products.

4. Process according to any one of the preceding claims, **characterised in that** at least one of the batter compositions of distinct viscosity and/or adapted to resist differently to a temperature between 100° and 250° C comprises a different water ratio.

5. Process according to any one of the preceding claims, **characterised in that** one of the batter compositions adapted to resist differently to a temperature between 100° and 250° C resists longer to these temperatures without 'burning' / 'charring' than said other batter composition and/or acquires a baked flexibility comparable to the baked flexibility of said other batter compositions having been submitted for a shorter time to said temperature between 100° and 250° C.

6. Process according to any one of the preceding claims, **characterised in that** one batter composition builds less bubbles than the other batter composition, when treated at a temperature between 100° and 250° C.

7. Process according to any one of the preceding claims,
**characterised in that** well defined batter lines building the outline of the sheet shaped food product, and/or building design lines of the sheet shaped food product are provided on the heated surface using at least one pouring head or die at a distance of less than 100 mm from the heated surface.

8. Process according to any one of the preceding claims,
**characterised in that** a contour batter outline is first provided on the heated surface and subsequently filled up with a separate batter mass forming the main surface of the sheet shaped food product.

9. Process according to any one of claims 1 - 8, **characterised in that** batter lines forming designs and figures are provided before pouring a separate batter mass forming the main surface of the sheet shaped food product.

10. Process according to any one of claims 1 - 8, **characterised in that** batter lines forming designs and figures of the sheet shaped food product are provided after pouring a separate batter mass forming the main surface of the sheet shaped food product.

11. Process according to any one of claims 8 - 10, **characterised in that** said separate batter mass forming the main surface of the sheet shaped food product is provided on the heated surface using at least one pouring head or die, at least one toppling pouring cup or at least one shower type spray head.

12. Process according to any one of claims 8 - 11, **characterised in that** said separate batter mass forming the main surface of the sheet shaped food product is more fluid / more liquid than the batter composition used for batter lines.

13. Process according to any one of the preceding claims,
**characterised in that** a spray-robot is used for providing batter lines on the heated surface and/or for providing a batter mass forming the main surface of the sheet shaped food product.

14. Sheet shaped food product having a selected shape and/or incorporating selected decorative designs / images, obtainable by a process according to any one of claims 1 - 13, **characterised in that** it is associated, as a combined party packaging unit, with atmosphere and/or user linked accessories for its use and/or consumption.

15. Apparatus for producing a food product in the form of a sheet, having a selected shape and/or incorporating decorative designs / images, comprising means for pouring a liquid batter on a heated surface and means for handling the obtained product **characterised in that** it comprises
- means for handling at least two distinct batter compositions
- robot means for building a well defined batter outline and/or design lines of a first batter composition on a heated surface at a temperature between 100° and 250° C
- means for pouring a second batter within a preformed batter outline.
